(19) **Europäisches Patentamt**

**European Patent Office**

**Office européen des brevets**

(11) Publication number: **0 517 983 A1**

# (12) EUROPEAN PATENT APPLICATION

(21) Application number: **91311435.1**

(22) Date of filing: **09.12.91**

(51) Int. Cl.⁵: **C09D 5/00, C09D 109/08**

(30) Priority: **11.06.91 US 713165**

(43) Date of publication of application:
**16.12.92 Bulletin 92/51**

(84) Designated Contracting States:
**DE FR IT**

(71) Applicant: **MALEK, INC.**
**4951 Ruffin Road**
**San Diego, California 92133(US)**

(72) Inventor: **Jaffari, Mark Darius**
**7586 Alonda Way**
**San Diego California 92038(US)**
Inventor: **Hinrichs, Richard James**
**931, Larue Fallbrook**
**California 92028(US)**
Inventor: **Pogue, Judith Waltz**
**601 Telegraph Canyon Road**
**105, Chula Vista California 91910(US)**
Inventor: **Rogers, William Joseph**
**7575 Linda Vista Road**
**26, San Diego California 92111(US)**

(74) Representative: **Wilson, Nicholas Martin et al**
**WITHERS & ROGERS 4 Dyer's Buildings**
**Holborn**
**London EC1N 2JT(GB)**

(54) **Chemical processing and thermal maskants.**

(57) A water based maskant composition is described which contains styrene-butadiene rubber latex emulsion ("SBR"), neoprene rubber latex emulsion and an ammonium salt of an acrylic polymer. The concentration of each component, based on parts by weight of solids of the component per 100 parts by weight of solids content of the SBR component ("phr"), is 7-30 phr of neoprene rubber latex and 0.4-5.0 phr of the polymeric ammonium acrylate salt. The maskant provides excellent film forming properties; maintains good edge adhesion; has good resistance to water permeability and edge penetration; has low permeability to anodizing, etching and chemical milling solutions; holds scribe cuts and cut edges well; and is both safe and convenient to handle, use, and strip. The maskants find use in a variety of applications, including as anodizing maskants, chemical milling maskants and protective storage coatings.

Rank Xerox (UK) Business Services

## BACKGROUND OF THE INVENTION

Field of the Invention:

The invention herein relates to maskant or coating compositions for use in metal and composite chemical processing, bonding, forming, storage and fabrication processes.

Background and Prior Art:

In the metal fabricating and working industries (as well as in parallel industries using composite materials) most work pieces undergo a variety of different fabrication and/or shaping operations to form the finished product. These include anodizing, chemical milling, scribing, forming, machining and bonding. For many metals and composites, it is necessary to protect at least some portion of the surface finish of the material while these and similar operations are being conducted, as for instance a) to preserve the surface appearance, b) to retain a clean surface free of the effects of chemical processing and subsequent operations such as bonding, or c) to form the desired milled or etched patterns in the material.

Commonly, the technique used for such surface protection is to coat the applicable area of the material surface with a maskant. Maskants form thin films which adhere to the metal or composite surface and which are intended to be impervious to the various fluids, treating agents, milling chemicals and the like which are used in various steps of the operations. (For brevity herein the material to be masked will usually be referred to as "metal." It will be understood, however, that not only metals and metal alloys but also materials such as some composites and plastics may be suitably used with the maskants of this invention.)

In the past the art has taught the use of materials such as tapes or coatings such as lacquers as maskants; see, for instance, Lyman (ed.), *Metals Handbook,* vol. 2, p. 624 (8th edn.: 1964). Such materials have not been particularly satisfactory, however. Tapes and similar materials are difficult and time consuming to apply and to strip after completion of the operations. Lacquers and similar organic coatings are costly, sometimes flammable, often form brittle films which do not adhere properly, and require solvents to subsequently strip them from the metal surface. Such solvents often cause toxicity problems and many are subject to strict environmental controls which can have a severe impact on conduct of the operations. Further, both the coatings and the solvents tend to discolor or otherwise mar the surface finishes.

In an attempt to avoid some of these problems, water-based maskants were developed. These maskants overcame some of the problems of the prior materials, since they were generally non-flammable and much less hazardous to work with. Stripping and clean-up was also somewhat simplified. However, the water-base materials still produced a number of problems, including staining of the surface from the water (particularly a problem with aluminum), film distortion upon curing which led to water penetration into areas believed to be masked, water corrosion (oxidation; rusting) of metal surfaces and poor chemical resistance to acid and alkaline metal preparation chemicals.

Notwithstanding the known problems of the tapes, lacquers and water-based materials, however, many of these materials are still widely used and their deficiencies are reluctantly tolerated, since manufacturers do not currently have any maskants available which can provide the necessary degree of masking with non-aggressive chemical properties. It would, therefore, be of significant advantage to the metal working and composite industry if there were available maskant compositions which provide good film coverage and stability, improved resistance to fluid penetration and lack of aggression to the coated surface.

## SUMMARY OF THE INVENTION

The invention herein is a water based maskant composition which provides for excellent film forming properties; maintains good edge adhesion; has good resistance to water permeability and edge penetration; has low permeability to anodizing, etching and chemical milling solutions; holds scribe cuts and cut edges well; is resistant to forming and bonding; and is both safe and convenient to handle, use, and strip. In the broadest form, the compositions herein comprise styrene-butadiene rubber latex emulsion ("SBR"), neoprene rubber latex emulsion and an ammonium salt of an acrylic polymer. The concentration of each component, based on parts by weight of the solids portion of the component per 100 parts by weight of the solids portion of the SBR component ("phr"), is 7-30 phr of neoprene rubber latex and 0.4-5.0 phr of polymeric ammonium acrylate salt.

## DETAILED DESCRIPTION AND PREFERRED EMBODIMENTS

The particular form of the composition to be used will, of course, depend primarily on the specific metal or composite material to be masked, the type of operation which is to be performed on the masked material in the process step or steps of interest, and the nature of the other chemicals present in the system, such as chemical millants. The overall composition defined herein may be used for a variety of different maskant purposes, and will provide all of the required properties as will be discussed below. The specific variations in components and their concentrations are intended to tailor the compositions for optimum performance in particular applications and chemical environments, and do not imply that other specific formulations within the broad generic composition defined herein would not also be operable, although it will be recognized that different formulations will have different degrees of efficacy in individual systems. The applicability of an particular formulation to a particular type of operation can be readily determined without any undue experimentation by those skilled in the art, such that the optimum composition for any particular metal or composite material and any manufacturing, shaping or working operation can be readily determined.

In its broadest form, the compositions herein are water based materials comprising styrene-butadiene rubber latex emulsion, neoprene rubber latex emulsion and an ammonium salt of an acrylic polymer. The concentration of each component, based on parts by weight of the solids portion of the component per 100 parts by weight of the solids portion of the SBR component ("phr"), is 7-30 phr of neoprene rubber latex and 0.4-5.0 phr of the polymeric ammonium acrylate salt.

The principal component of the composition is the styrene butadiene rubber latex emulsion. Such materials are widely known and described in detail in many publications; see, for example, Hofmann, *Rubber Technology Hannbook*, § 3.3.2 (Hanser Publ.: 1989) and Morton (ed.), *Rubber Technology*, chs. 7 and 19 (Van Nostrand Reinhold: 1987). The SBR latex emulsions normally contain equal amounts of styrene and butadiene monomers or a predominance of butadiene with styrene/butadiene monomer ratios on the order of about 25:75-50:50. Commonly, the total solids content in the latex emulsion is on the order of 25%-75%, with the latices preferred for the present film forming applications being usually on the order of about 25%-50% solids. The SBR latices are commonly prepared by emulsion polymerization of the desired ratios of styrene and butadiene monomers together with any modifiers or catalysts.

Many commercial SBR latices are available, and all will have various amounts of additives, most of which are proprietary to the SBR latex formulator. For the most part, any of the conventional commercial SBR latices will be found suitable for use in the maskant compositions of this invention. If a user has doubts about the suitability of any specific commercial SBR latex material, it will be found quite simple to make up a small batch of the intended maskant formulation using the questioned SBR latex, coat a sample coupon with the formulation and conduct a routine exposure test to confirm or eliminate the particular commercial product. We have found Good-Rite® SBR Latex 1800X73, commercially available from The B.F. Goodrich Company, Chemical Group (Cleveland, Ohio) to be quite suitable, and are aware that there are numerous other commercial SBR latices which are substantially equivalent to this product for the purposes of our invention.

In the compositions of the this invention the SBR latex emulsion is considered the "base" of the composition, and the concentration of all other components (both required and optional) stated as phr of component solids based on the solids content of the SBR.

The second principal component of the composition is a neoprene rubber latex emulsion. The neoprenes are polychloroprenes, also referred to as chlorobutadiene polymers, and are based on 2-cholorobutadiene monomer. Their general properties are described in the aforementioned Hofmann text at § 3.3.4 and Morton text in chs. 12 (Part I) and 19. Normally the solids content of the neoprene latices is approximately 30%-60%. The manufacture of the latices is by means of forming an aqueous colloidal dispersion of polychloroprene using conventional emulsion technology. It is common for specific classes of neoprenes and their latices to be formulated for coatings, and those classes are described in the art and sold commercially for coating purposes. Such commercial materials are normally formulated by the manufacturers without the presence of staining additives.

As with the SBR latices, a number of commercial neoprene latices are available, and all will have various amounts of additives, most of which are proprietary to the latex formulator. For the most part, any of the conventional commercial neoprene latices designed for coatings will be found suitable for use in the maskant compositions of this invention. Again, if a user has doubts about the suitability of any specific commercial neoprene latex material, it will be found quite simple to test it in the same manner described above for the SBR latices. We have found "Neoprene Latex 115," commercially available from E.I. duPont de Nemours & Company (Wilmington, Delaware) to be quite suitable, and are aware that there are numerous other commercial neoprene latices which are substantially equivalent to this product for the purposes of our invention.

In the compositions of the present invention the neoprene latex will be present as from 7-30 phr, preferably 20-25 phr, of the composition.

The third component of the composition is an ammonium salt of an acrylic polymer. While such materials are generally proprietary to the manufacturer in their exact compositions, the class of materials suitable herein can be described as an emulsion containing approximately 20%-25% of the salt with less than 1% of residual monomers or ammonia and the balance water. The emulsions are colorless, have an ammonia odor, a pH in the range of 8.5-10.0, a viscosity of no more than 170 cps, and a specific gravity in the range of 1.0-1.2. Decomposition normally yields acrylic monomers. The salts are defined as thickeners and sold commercially. We have found Acrysol® "G-110 Thickener," commercially available from Rohm and Haas Company (Philadelphia, Pennsylvania) to be quite suitable, and are aware that there are numerous other commercial ammonium salt thickeners which are substantially equivalent to this product for the purposes of our invention.

In the compositions of the present invention the polymeric ammonium acrylate salt will be present as from 0.4-5.0 phr, preferably 1.0-3.0 phr, of the composition.

Preferably the compositions will also contain a small portion of an antioxidant or corrosion inhibitor, usually in a concentration of up to about 5.0 phr, preferably 2.0-4.0 phr. Numerous antioxidants and corrosion inhibitors are described in the aforementioned Hofmann (§ 4.3) and Morton (ch. 2) texts. We have used with success a commercial solution of sulfonate esters and diethylethanolamine ("SE/DEEA") sold under the trade name "Na-Sul 412 Corrosion Inhibitor," and believe that others of the materials described in the art would also be suitable. The routine screening test described above will enable those skilled in the art to select appropriate inhibitors for their particular compositions without undue experimentation.

Preferably the composition will also contain a non-ionic surfactant to aid in the spread of the film; these materials commonly also serve as emulsion stabilizers. Typically, the surfactant acts as either or both wetting agents or emulsifiers to appreciably reduce the surface tension of the water in the latex emulsions, causing the emulsions to spread more rapidly and evenly as films. The surfactant/stabilizer will normally be present in an amount up to about 5.0 phr, preferably 0.5-1.0 phr. A number of suitable non-ionic surfactants are described in the literature and readily available as commercial products. We have successfully used alkyl sulfonic acid salts such as sodium salts of alkyl naphthalene sulfonic acid (available commercially under the trade name "Darvan #1").

Also present may be plasticizing agents, such as fatty amine carboxylates, to aid in the application of the coating to the metal or composite substrate. These will be present as up to about 3.5 phr. preferably 0.3-1.0 phr.

Finally, the compositions can include a variety of different fillers, usually inorganic materials such as clay, silica, titanium dioxide, calcium carbonate and the like. A wide variety of fillers are described in the Hofmann (§ 4.4) and Morton (ch. 3) texts. The fillers will be present as on the order of up to about 150 phr, preferably about 50-100 phr. Some fillers, such as titanium dioxide, can also serve to impart coloring to the maskants, to enable the maskant films to more readily be visually inspected. We have successfully used various combinations of kaolin clay, silica and/or $TiO_2$ fillers, usually in concentrations of up to about 70 phr of clay, 60 phr of silica and 20 phr of $TiO_2$.

Finally, emulsion breaking agents can also be present in order to reduce an bubble content in the film, and dyes can be used to impart desired coloration to the coatings for ease of the metalworkers in accurate cutting for such operations as chemical milling.

The compositions of this invention can be formed by conventional mixing using regular liquid slurry mixing equipment. The compositions are typically stable for an extended period.

The following examples will illustrate the compositions of this invention. The specific commercial products used in each formulation are identified above. "Balance" for the water component (both here and in the claims) refers to the amount of water required to produce a slurry with an overall water content of 40%-60% by volume.

| Example I: Anodize Maskant | |
|---|---|
| Component | PHR |
| Styrene-butadiene rubber latex | Base |
| Neoprene rubber latex | 23.5 |
| Ammonium salt of acrylic polymers | 1.4 |
| Na salt of alkylnaphthalene sulfonic acid | 0.6 |
| SE/DEEA | 3.7 |
| Kaolin clay | 31.3 |
| Silica | 41.7 |
| Titanium dioxide | 8.3 |
| Fatty amine carboxylate | 0.4 |
| Dyes | 0.6 |
| Water | Balance |

| Example II: Protective Storage Coating | |
|---|---|
| Component | PHR |
| Styrene-butadiene rubber latex | Base |
| Neoprene rubber latex | 23.5 |
| Ammonium salt of acrylic polymers | 1.0 |
| Na salt of alkylnaphthalene sulfonic acid | 0.6 |
| SE/DEEA | 3.7 |
| Silica | 50.0 |
| Titanium dioxide | 12.5 |
| Fatty amine carboxylate | 0.4 |
| Dyes | 0.6 |
| Water | Balance |

| Example III: Chemical Milling Maskant | |
|---|---|
| Component | PHR |
| Styrene-butadiene rubber latex | Base |
| Neoprene rubber latex | 23.5 |
| Ammonium salt of acrylic polymers | 2.9 |
| Na salt of alkylnaphthalene sulfonic acid | 0.6 |
| SE/DEEA | 3.7 |
| Kaolin clay | 62.5 |
| Silica | 25.0 |
| Titanium dioxide | 8.3 |
| Fatty amine carboxylate | 0.4 |
| Dyes | 0.6 |
| Water | Balance |

**Claims**

1. A maskant composition comprising, in parts by dry weight of solids per 100 parts of dry weight of styrene butadiene rubber latex emulsion solids:

5

| styrene butadiene rubber latex emulsion | 100 |
|---|---|
| neoprene rubber latex emulsion | 7-30 |
| ammonium salt of acrylic polymer | 0.4-5.0 |

2. A maskant composition as in Claim 1 comprising, in parts by dry weight of solids per 100 parts of dry weight of styrene butadiene rubber latex emulsion solids:

| styrene butadiene rubber latex emulsion | 100 |
|---|---|
| neoprene rubber latex emulsion | 20-25 |
| ammonium salt of acrylic polymer | 1.0-3.0 |

3. A maskant composition as in Claim 1 comprising, in parts by dry weight of solids per 100 parts of dry weight of styrene butadiene rubber latex emulsion solids:

| styrene butadiene rubber latex emulsion | 100 |
|---|---|
| neoprene rubber latex emulsion | 7-30 |
| ammonium salt of acrylic polymer | 0.4-5.0 |
| antioxidant/corrosion inhibitor | up to 5.0 |

4. A maskant composition as in Claim 4 wherein said antioxidant/corrosion inhibitor comprises an aqueous mixture of sulfonic esters and diethylethanolamine.

5. A maskant composition as in Claim 3 comprising, in parts by dry weight of solids per 100 parts of dry weight of styrene butadiene rubber latex emulsion solids:

| styrene butadiene rubber latex emulsion | 100 |
|---|---|
| neoprene rubber latex emulsion | 20-25 |
| ammonium salt of acrylic polymer | 1.0-3.0 |
| antioxidant/corrosion inhibitor | 2.0-4.0 |

6. A maskant composition as in Claim 5 wherein said antioxidant/corrosion inhibitor comprises an aqueous mixture of sulfonic esters and diethylethanolamine.

7. A maskant composition as in Claim 1 comprising, in parts by dry weight of solids per 100 parts of dry weight of styrene butadiene rubber latex emulsion solids:

| styrene butadiene rubber latex emulsion | 100 |
|---|---|
| neoprene rubber latex emulsion | 7-30 |
| ammonium salt of acrylic polymer | 0.4-5.0 |
| antioxidant/corrosion inhibitor | up to 5.0 |
| surfactant | up to 5.0 |

8. A maskant composition as in Claim 7 wherein said surfactant comprises a sodium salt of an alkylnaphthalene sulfonic acid.

9. A maskant composition as in Claim 7 comprising, in parts by dry weight of solids per 100 parts of dry weight of styrene butadiene rubber latex emulsion solids:

| styrene butadiene rubber latex emulsion | 100 |
|---|---|
| neoprene rubber latex emulsion | 20-25 |
| ammonium salt of acrylic polymer | 1.0-3.0 |
| antioxidant/corrosion inhibitor | 2.0-4.0 |
| surfactant | 0.5-1.0 |

10. A maskant composition as in Claim 9 wherein said surfactant comprises a sodium salt of an alkylnaphthalene sulfonic acid.

11. A maskant composition as in Claim 1 comprising, in parts by dry weight of solids per 100 parts of dry weight of styrene butadiene rubber latex emulsion solids:

| styrene butadiene rubber latex emulsion | 100 |
|---|---|
| neoprene rubber latex emulsion | 7-30 |
| ammonium salt of acrylic polymer | 0.4-5.0 |
| filler | up to 150 |

12. A maskant composition as in Claim 10 wherein said filler comprises an inorganic material.

13. A maskant composition as in Claim 12 wherein said inorganic filler is clay, calcium carbonate, silica or titanium dioxide.

14. A maskant composition as in Claim 1 adapted for use as a anodize maskant and comprising, in parts by dry weight of solids per 100 parts of dry weight of styrene butadiene rubber latex emulsion solids:

| Styrene-butadiene rubber latex | 100 |
|---|---|
| Neoprene rubber latex | 23.5 |
| Ammonium salt of acrylic polymers | 1.4 |
| Na salt of alkylnaphthalene sulfonic acid | 0.6 |
| SE/DEEA | 3.7 |
| Kaolin clay | 31.3 |
| Silica | 41.7 |
| Titanium dioxide | 8.3 |
| Fatty amine carboxylate | 0.4 |
| Dyes | 0.6 |
| Water | Balance |

15. A maskant composition as in Claim 1 adapted for use as a protective storage coating and comprising, in parts by dry weight of solids per 100 parts of dry weight of styrene butadiene rubber latex emulsion solids:

| Styrene-butadiene rubber latex | 100 |
|---|---|
| Neoprene rubber latex | 23.5 |
| Ammonium salt of acrylic polymers | 1.0 |
| Na salt of alkylnaphthalene sulfonic acid | 0.6 |
| SE/DEEA | 3.7 |
| Silica | 50.0 |
| Titanium dioxide | 12.5 |
| Fatty amine carboxylate | 0.4 |
| Dyes | 0.6 |
| Water | Balance |

16. A maskant composition as in Claim 1 adapted for use as a chemical milling maskant and comprising, in parts by dry weight of solids per 100 parts of dry weight of styrene butadiene rubber latex emulsion solids:

| Styrene-butadiene rubber latex | 100 |
|---|---|
| Neoprene rubber latex | 23.5 |
| Ammonium salt of acrylic polymers | 2.9 |
| Na salt of alkylnaphthalene sulfonic acid | 0.6 |
| SE/DEEA | 3.7 |
| Kaolin clay | 62.5 |
| Silica | 25.0 |
| Titanium dioxide | 8.3 |
| Fatty amine carboxylate | 0.4 |
| Dyes | 0.6 |
| Water | Balance |

## European Patent Office

EUROPEAN SEARCH REPORT

Application Number

EP    91 31 1435

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | WORLD PATENTS INDEX<br>Section Ch, Week 7501,<br>Derwent Publications Ltd., London, GB;<br>Class A, AN 75-00450W<br>& JP-A-49 054 435 (NOBUA O) 27 May 1974<br>* abstract * | 1 | C09D5/00<br>C09D109/08 |
| | ----- | | |
| | | | **TECHNICAL FIELDS SEARCHED (Int. Cl.5 )** |
| | | | C09D |

The present search report has been drawn up for all claims

| Place of search | Date of completion of the search | Examiner |
|---|---|---|
| THE HAGUE | 10 SEPTEMBER 1992 | VAN HUMBEECK F. |